# NOUVEAU FASCICULE DE BREVET EUROPEEN

(11) **EP 1 695 848 B2**
(45) Date de publication et mention de la décision concernant l'opposition: **05.11.2014**
(45) Mention de la délivrance du brevet: 08.08.2007
(21) Numéro de dépôt: 06003574.8
(22) Date de dépôt: 22.02.2006
(51) Int. Cl.: B60H 1/00

(54) **Boitier d'entrée d'air pour une installation de chauffage et/ou de climatisation dans des véhicules**
Lufteinlassgehäuse für Fahrzeugklimaanlage
Air intake housing for a vehicle heating and/or air conditioning system

(30) Priorité: 23.02.2005 DE 102005008330
(43) Date de publication de la demande: 30.08.2006
(73) Titulaire: Valeo Klimasysteme GmbH, 96476 Bad Rodach (DE)
(72) Inventeur: Urban, Reinhard, 98530 Dietzhausen (DE); Krompass, Andreas, 81375 München (DE); Lachenmaier, Heinrich, 96450 Coburg (DE); Stroehla, Ralph, 96450 Coburg (DE)
(74) Mandataire: Pellegrini, Marie Claude

(56) Documents cités:
- EP-A- 0 690 272
- EP-A- 1 580 049
- DE-A1- 10 018 268
- DE-A1- 19 717 335
- US-A1- 2005 095 970

## Description

La présente invention concerne un boîtier d'entrée d'air pour une installation de chauffage et/ou de climatisation dans des véhicules.

Les boîtiers d'entrée d'air conventionnels possèdent un boîtier de répartition dans lequel une entrée d'air extérieur est réalisée et au moins un volet d'entrée d'air disposé de manière pivotante sur un axe dans le boîtier de répartition qui est disposé transversalement à la direction du flux dans l'entrée d'air extérieur. En position fermée, le volet d'entrée d'air repose avec sa bordure extérieure sur une surface d'étanchéité qui entoure l'entrée d'air extérieur. Lorsque le volet d'entrée d'air est pivoté en position fermée, seule une petite fente de pénétration pour le flux d'air extérieur subsiste avant d'atteindre la position de fermeture. Dans cette petite fente de pénétration, des vibrations sont générées par la vitesse élevée du flux, lesquelles provoquent des bruits de souffle ou de sifflement.

On a déjà entrepris des expériences afin d'empêcher ces bruits gênants. Dans le document EP 0 690 272 A1, on décrit des volets d'aération dont les arêtes sont irrégulièrement courbées de manière convexe et concave. En variante, on prévoit que les volets d'aération présentent une épaisseur variable afin que l'air s'écoulant dessus rencontre une section transversale variable sur la longueur du volet.

Dans le document DE 197 17 335 Al, on décrit un volet d'entrée d'air pourvu d'une arête libre conçue de manière irrégulière. Grâce à cette mesure, différentes vitesses de flux et turbulences sont générées sur la longueur de l'arête.

Dans le document DE 100 18 268 A1, on décrit des volets d'aération qui comportent, à proximité immédiate de leur arête de fermeture libre, des nervures faisant saillie perpendiculairement à des arêtes libres, ondulées irrégulièrement, qui provoquent une déviation de la direction du flux et différentes vitesses de flux sur la longueur du volet. Toutes ces mesures reposent en fin de compte sur le principe de la variation de la section transversale de flux d'air directement entre l'arête du volet d'entrée d'air et la surface de siège agissant en concomitance. Cependant, il en résulte inévitablement des zones de section transversale très petites avec une vitesse de flux en conséquence plus élevée qui entraînent de nouveaux bruits gênants.

Le document JP 2004-314794 A divulgue un boîtier d'entrée d'air selon le préambule de la revendication 1.

Selon l'invention, un boîtier d'entrée d'air pour une installation de chauffage et/ou de climatisation dans des véhicules est créé, lequel empêche la génération de bruits gênants lors de la fermeture du volet d'entrée d'air de manière plus efficace que les mesures connues. Le boîtier d'entrée d'air selon l'invention comprend un boîtier de répartition dans lequel une entrée d'air extérieur est réalisée et au moins un volet d'entrée d'air disposé de manière pivotante sur un axe dans le boîtier du répartition. Le volet d'entrée d'air est disposé dans l'entrée d'air extérieur transversalement à la direction du flux et, dans sa position fermée il repose avec sa bordure extérieure sur une surface d'étanchéité du boîtier du répartition, laquelle entoure l'entrée d'air extérieur. Des éléments de déviation sont disposés à distance de la fente de pénétration formée en position presque fermée entre la bordure extérieure et la surface d'étanchéité et sont réparties transversalement à la direction du flux à intervalles irréguliers, lesquels provoquent une variation de la vitesse du flux d'air transversalement à la direction générale de ce flux. A l'intérieur de la fente de pénétration, la vitesse du flux n'est donc pas homogène bien que la section transversale du flux ne comporte aucun rétrécissement local. Comme la vitesse du flux n'est pas modulée dans la fente de pénétration mais à distance de celle-ci, il n'y a aucune section transversale de flux rétrécie localement dans la fente de pénétration de sorte qu'aucun autre bruit gênant n'est généré.

Dans le mode de réalisation préféré, des nervures sont disposées sur le volet d'entrée d'air, lesquelles font saillie dans le passage du flux lorsque le volet d'entrée d'air est presque fermé et présentent des longueurs irrégulières. Les intervalles irréguliers sont compris entre 5mm et 50mm alors que les longueurs irrégulières sont comprises entre 5mm et 30mm. Avec des nervures disposées de la sorte, la variation souhaitée de la vitesse du flux d'air peut être très facilement obtenue à distance de la fente de pénétration, cette variation pouvant être optimisée par la forme, la taille et la disposition des nervures aussi bien en aval qu'en amont de la fente de pénétration dans le sens du flux.

D'autres caractéristiques et avantages de l'invention ressortent de la description suivante d'un mode de réalisation préféré faisant référence aux dessins joints. Les dessins représentent :
- la figure 1 est une vue en perspective d'un boîtier d'entrée d'air pour commander l'air extérieur et l'air recirculé,
- la figure 2 est une vue en élévation d'un volet d'entrée d'air extérieur,
- la figure 3 est une vue en coupe d'un volet d'entrée d'air,
- la figure 4 est une coupe schématique du boîtier d'entrée d'air,
- les figure 4A et 4B sont des vues détaillées et agrandies des sections A et B de la figure 4 et
- la figure 5 est une vue en perspective du boîtier d'entrée d'air avec vue sur la disposition relative des éléments de déviation sur un volet d'entrée d'air extérieure et sur une zone de paroi du boîtier de répartition.

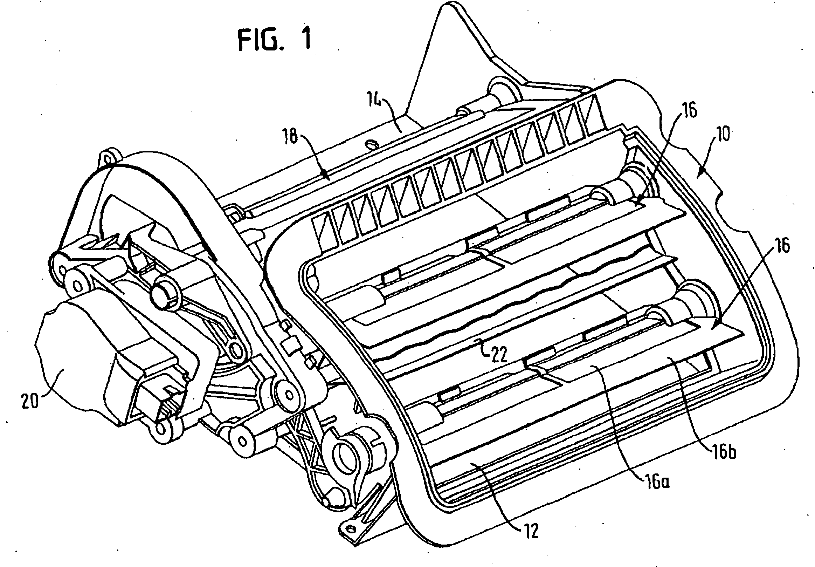

Le boîtier d'entrée d'air représenté à la figure 1 pour une installation de chauffage et/ou de climatisation dans des véhicules présente un boîtier de répartition, qui est d'une façon générale désigné par la référence 10 et est installé contre un ventilateur (non représenté).

Le boîtier de répartition 10 présente une entrée d'air extérieur 12 et une entrée d'air recirculé 14. L'entrée d'air extérieur 12 est commandée par deux volets d'entrée d'air extérieur 16 disposés de manière pivotante sur des axes parallèles dans le boîtier de répartition 10. L'entrée d'air recirculé 14 est commandée par un volet d'entrée d'air recirculé 18 disposé de manière pivotante dans le boîtier de répartition 10. Les volets d'entrée d'air autrement appelé d'aération 16 et 18 sont déplacés par un organe moteur 20 disposé sur le côté du boîtier de répartition 10. L'entrée d'air extérieur 12 est divisée en deux moitiés par une tige 22, chacune d'entre elles étant obturée par l'un des volets d'entrée d'air extérieur 16. Ces volets d'aération 16 sont rectangulaires et s'étendent le long de leur axe de pivotement. Ils sont composés d'un corps en plastique rigide 16a et d'une lèvre d'étanchéité 16b en matériau élastique appliquée sur la périphérie dudit corps. Les lèvres d'étanchéité coopèrent avec une surface d'étanchéité formée sur le boîtier de répartition, laquelle entoure l'entrée d'air extérieur 12. La tige 22 forme un côté de la surface d'étanchéité périphérique pour chacun des volets d'entrée d'air extérieur 16.

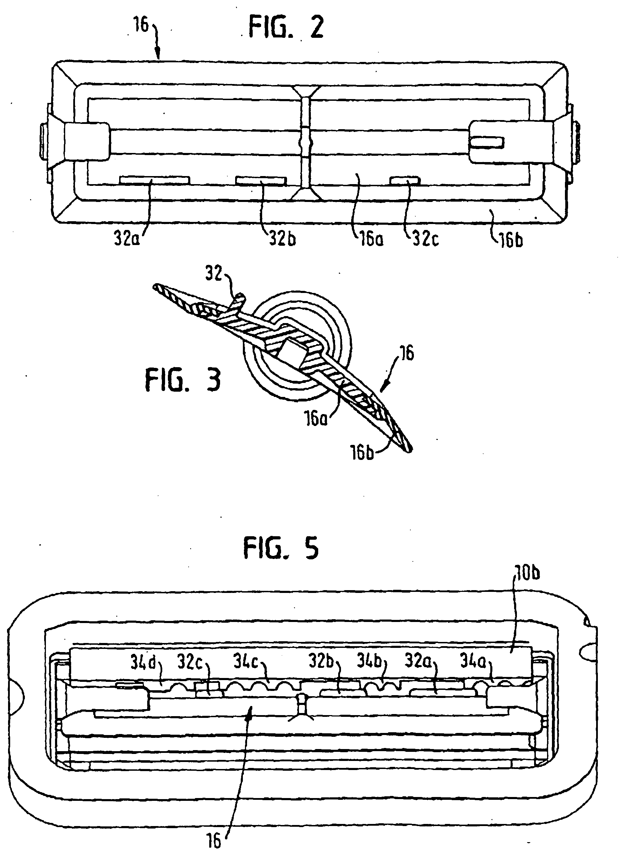

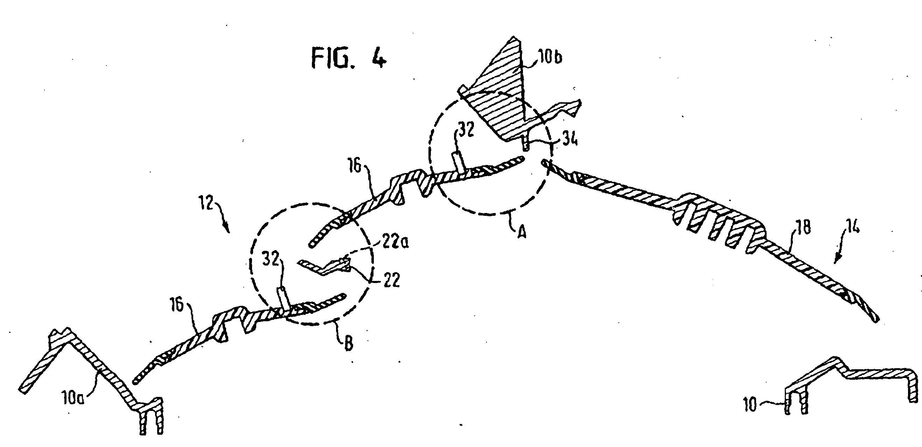

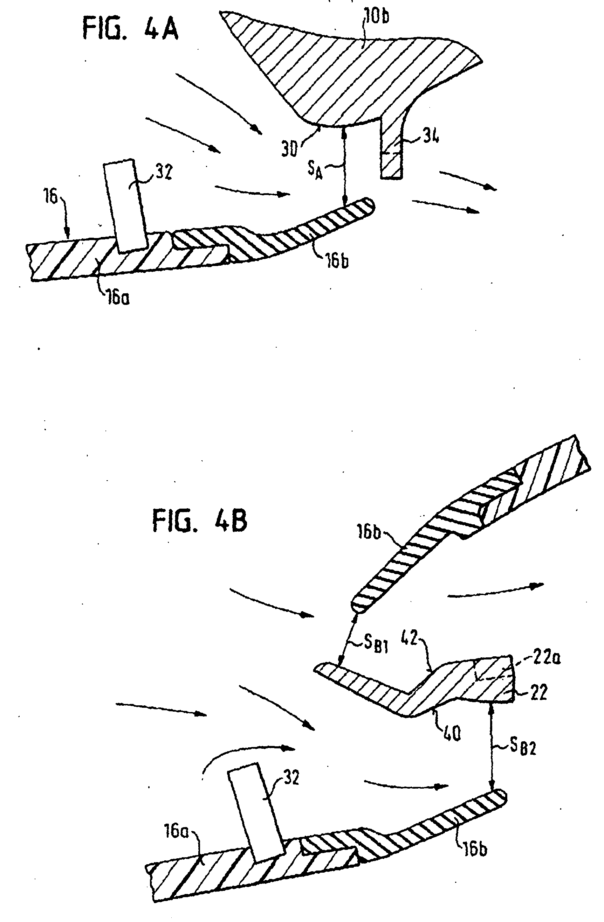

Les particularités selon l'invention du boîtier d'entrée d'air sont maintenant expliquées en référence aux figures 4, 4A, 4B et 5.

L'entrée d'air extérieur 12 est délimitée par une zone de paroi inférieure 10a et une zone de paroi supérieure 10b du boîtier de répartition 10. Une surface d'étanchéité 30 qui coopère avec l'extrémité libre de la lèvre d'étanchéité 16b du volet d'entrée d'air extérieure 16 est formée sur la zone de paroi supérieure 10b.

Les figures 4, 4A et 4B représentent les volets d'entrée d'air extérieure dans une position s'approchant de la position de fermeture finale. Sur la figure 4A, une fente de pénétration restante est désignée par la référence S_{A}. En amont et à distance de cette fente de pénétration SA, un élément de déviation qui se présente sous la forme d'une nervure 32, faisant saillie perpendiculairement au corps en plastique 16a, est formée sur le corps en plastique 16a du volet d'entrée d'air extérieure 16. Cette nervure 32 peut être moulée dans le corps en plastique 16a ou être rapportée ou formée dessus. En aval et également à distance de la fente de pénétration S_{A}, une autre nervure 34 est disposée sur la zone de paroi 10b du boîtier de répartition. Cette nervure 34 s'étend généralement parallèlement à la nervure 32 lorsque celle-ci se trouve dans la position représentée sur la figure 4A. Les deux nervures 32 et 34 s'étendent ainsi généralement transversalement à un flux d'air extérieur s'écoulant à travers la fente de pénétration S_{A}. Les nervures 32, 34 font saillie dans ce flux, le déviant localement et provoquant ainsi une modulation de la vitesse de flux, comme cela sera expliqué plus dans le détail.

Les nervures 32 et 34 ne s'étendent pas en continu sur toute la longueur des volets d'entrée d'air extérieure 16. Dans le mode de réalisation représenté à la figure 2, chaque corps en plastique rigide 16a comporte plutôt trois nervures 32a, 32b et 32c de longueurs différentes réparties sur la longueur dudit corps. Les deux nervures 32a et 32b les plus longues sont disposées à une distance relativement faible, par exemple 5mm, l'une par rapport à l'autre sur la première moitié du volet d'entrée d'air, tandis que la nervure la plus courte 32c est disposée sur l'autre moitié à une distance plus importante des autres nervures, par exemple 50mm.

Des nervures 34 sont également réparties de manière irrégulière sur l'étendue correspondante de la zone de paroi 10b. Dans le mode de réalisation décrit, quatre nervures 34a, 34b, 34c et 34d sont, comme cela est visible à la figure 5, disposées à des distances irrégulières les unes des autres, c'est-à-dire « en quinconce » par rapport aux nervures du volet 32a, 32b et 32c également représentées à la figure 5. Il est également visible que les nervures 34a à 34d comportent un contour sur leur arête libre qui se compose de creux en demi-cercle et de zones de pointe droites. Même si cela n'est pas représenté dans les dessins, les nervures 32 des volets d'entrée d'air extérieur peuvent également présenter un contour conçu de manière identique. On notera que les longueurs de nervure disposée sur le volet et/ou de nervure disposée sur la zone de paroi 10b et/ou de nervure située sur la tige 22 sont irrégulières et sont comprises entre 5mm et 30mm.

Comme représenté à la figure 4B, la tige 22 forme une surface d'étanchéité 40 qui coopère avec une lèvre d'étanchéité ou bordure extérieure 16b du volet d'entrée d'air extérieur inférieur représenté à la figure 4B. La tige 22 présente aussi une surface d'étanchéité 42 qui coopère avec la lèvre d'étanchéité 16d du volet d'entrée d'air extérieur supérieur représenté sur la figure 4B. Une fente de pénétration supérieure S_{B1} est formée entre la tige 22 et le volet d'entrée d'air extérieur supérieur ainsi qu'une fente de pénétration inférieure S_{B2} entre la tige 22 et le volet d'entrée d'air extérieur inférieur. Le volet d'entrée d'air extérieur inférieur 16 comporte une nervure 32 qui est disposée de manière identique à la figure 4A sur le corps en plastique rigide 16a à proximité de la jonction avec la lèvre d'étanchéité 16b et qui est formée dans le mode de réalisation concret par trois nervures distinctes 32a, 32b et 32c, comme représenté à la figure 2. La nervure 32 se trouve également ici en amont à distance de la fente de pénétration S₈₂. La tige 22 est pourvue, en aval de la fente de pénétration S_{B1} sur son arête opposée au volet d'entrée d'air extérieure supérieur, d'un contour ondulé ou bord en forme de vague qui est indiqué en pointillés à la figure 4B en 22a et également à la figure 1. On comprend que ce contour ou profil ondulé est réalisé sur l'arête longitudinale libre, c'est-à-dire l'arête de la tige 22 orientée vers l'intérieur du boîtier de répartition 10.

Le flux d'air extérieur représenté par des flèches à la figure 4B est modulé en amont de la fente de pénétration S_{B2} et en aval de la fente de pénétration S_{B1} grâce aux nervures 32 et au contour ondulée 22a de manière à ce que la répartition de vitesse de l'air ne soit pas homogène sur la longueur des fentes de pénétration. Les bruits gênants inévitables lors du processus de fermeture des volets d'entrée d'air extérieur sont ainsi répartis sur un spectre de fréquence élargi dans lequel aucun maximum prononcé ne survient. Grâce à la disposition, à la forme et au nombre de nervures et/ou d'éléments de déviation, le spectre de fréquence résultant peut être optimisé. Par exemple, il peut être avantageux que dans la disposition représentée à la figure 5, les nervures 32a, 32b et 32c du volet d'entrée d'air extérieur soient généralement disposées en quinconce par rapport aux nervures 34a à 34d sur la zone de paroi 10b du boîtier de répartition 10, cependant avec un chevauchement défini sur les bordures des nervures.

Les nervures 34a à 34d peuvent présenter des évidements et des zones de pointe de profondeurs et de formes différentes. Les nervures 32a à 32c peuvent également présenter un contour et des hauteurs différentes. L'essentiel dans tous les modes de réalisation est que la vitesse de flux soit modulée à distance de la fente de pénétration concernée de manière à ce que la répartition de la vitesse de flux d'air ne soit pas homogène sur la longueur de la fente de pénétration. Ce résultat est obtenu au moyen des éléments de déviation qui prennent, par exemple, la forme des nervures 32, 32a à 32c, 34, 34a à 34d et le contour ondulé de la tige 22.

On notera que ce résultat est particulièrement bien atteint quand la distance qui sépare les éléments de déviation de la fente de pénétration de l'aire est comprise entre 8mm et 25mm, la distance minimum étant commandé par la limite de la jonction entre le corps rigide 16a du volet avec la lèvre d'étanchéité 16b.

Par ailleurs, on considère que la fente de pénétration est créée entre la bordure extérieure du volet et la surface d'étanchéité du boîtier quand l'espace qui sépare cette bordure de la surface d'étanchéité est comprise entre 1mm et 7mm. On considère ainsi que le volet est en position presque fermée.

Les nervures localisées sur le volet, sur le boîtier ou sur la tige présente une hauteur comprise entre 1mm et 7mn, cette hauteur étant mesurée entre la face de l'élément qui porte la nervure, au pied de celle-ci, et le bord de cette nervure situé dans le flux d'air. On notera qu'il existe une relation étroite entre la hauteur des nervures et la distance entre celle-ci et la fente de pénétration.

Le sens des termes amont et aval s'entend par rapport au sens de déplacement du flux d'air à l'intérieur du boîtier d'entrée d'air.

## Revendications

1. Boîtier d'entrée d'air pour une installation de chauffage et/ou de climatisation dans des véhicules, comprenant un boîtier de répartition (10) dans lequel une entrée d'air extérieur (12) est réalisée, et au moins un volet d'entrée d'air (16) disposé de manière pivotante sur un axe dans le boîtier de répartition et disposé dans l'entrée d'air extérieur transversalement à la direction du flux d'air, ledit volet (16) en position fermée reposant avec sa bordure extérieure sur une surface d'étanchéité du boîtier de répartition, laquelle entoure l'entrée d'air extérieur (12), des éléments de déviation étant disposés pour provoquer une variation de la vitesse du flux transversalement à la direction générale du flux, lesdits éléments de déviation étant disposés à distance d'une fente de pénétration (SA, SB1, SB2) formée en position presque fermée entre la bordure extérieure et la surface d'étanchéité, **caractérisé en ce que** les éléments de déviation sont répartis à intervalles irréguliers transversalement à la direction du flux (22a, 32, 32a-32c, 34, 34a-34d).

2. Boîtier d'entrée d'air selon la revendication 1, **caractérisé en ce que** les éléments de déviation sont des nervures (32, 32a-32c) disposées sur le volet d'entrée d'air (16), lesquelles font saillie dans le passage du flux lorsque le volet d'entrée d'air est presque fermé.

3. Boîtier d'entrée d'air selon les revendications 1 ou 2, **caractérisé en ce que** les éléments de déviation présentent des longueurs irrégulières transversalement à la direction du flux.

4. Boîtier d'entrée d'air selon l'une quelconque des revendications 1 à 3, **caractérisé en ce que** des nervures (34, 34a-34d) sur le boîtier de répartition sont disposées en aval de la fente de pénétration selon le sens du flux, en quinconce par rapport aux nervures (32, 32a-32c) sur le volet d'entrée d'air situées en amont de la fente de pénétration.

5. Boîtier d'entrée d'air selon la revendication 4, **caractérisé en ce que** les nervures (32, 32a-32c) du volet d'entrée d'air se chevauchent partiellement avec les nervures (34, 34a-34d) du boîtier de répartition au niveau de leurs bordures latérales.

6. Boîtier d'entrée d'air selon l'une quelconque des revendications 1 à 5, **caractérisé en ce que** les nervures (34, 34a-34d) du boîtier de répartition comportent un profil ondulé sur une arête longitudinale libre.

7. Boîtier d'entrée d'air selon la revendication 6, **caractérisé en ce que** le profil ondulé est formé par des évidements voisins d'une forme sensiblement en demi-cercle.

8. Boîtier d'entrée d'air selon la revendication 7, **caractérisé en ce que** les évidements en demi-cercle présentent des rayons différents.

9. Boîtier d'entrée d'air selon l'une quelconque des revendications 3 à 8, **caractérisé en ce que** les nervures du volet d'entrée d'air présentent dans une direction et transversalement à la direction du flux des longueurs constamment décroissantes.

10. Boîtier d'entrée d'air selon l'une quelconque des revendications 1 à 9, **caractérisé en ce que** le volet d'entrée d'air comporte un corps en plastique rigide (16a) et une lèvre d'étanchéité (16b) en matière élastique appliquée sur sa bordure coopérant avec la surface d'étanchéité, et **en ce que** les nervures (32, 32a-32c) sur le corps en plastique sont formées en limite de la jonction avec la lèvre d'étanchéité.

11. Boîtier d'entrée d'air selon l'une quelconque des revendications 1 à 10, **caractérisé en ce que** l'entrée d'air extérieur est divisée par une tige transversale (22) en deux passages de flux parallèles pourvu chacun d'une ouverture de pénétration qui peut être fermée par un volet d'entrée d'air respectif.

## Patentansprüche

1. Lufteintrittskasten für eine Heiz- und / oder Klimaanlage in Fahrzeugen, umfassend ein Verteilergehäuse (10), in dem ein Außenlufteintritt (12) realisiert ist, und wenigstens eine Lufteintrittsklappe (16), die schwenkbar auf einer Achse in dem Verteilerkasten angeordnet ist und im Außenlufteintritt transversal zur Richtung des Luftstroms angeordnet ist, wobei die genannte Klappe (16) in geschlossener Position mit ihrem äußeren Rand auf einer Abdichtungsfläche des Verteilerkastens ruht, welche den Außenlufteintritt (12) umgibt, wobei Ableitelemente angeordnet sind, um eine Änderung der Geschwindigkeit des Stroms transversal zur allgemeinen Richtung des Stroms hervorzurufen, wobei die genannten Ableitelemente entfernt von einem Eindringungsschlitz (SA, SB1, SB2) angeordnet sind, der in fast geschlossener Form zwischen dem äußeren Rand und der Abdichtfläche gebildet ist, **dadurch gekennzeichnet, dass** die Ableitelemente (22a, 32, 32a, -32c, 34, 34a-34d) in regelmäßigen Intervallen transversal zur Richtung des Stroms verteilt sind.

2. Lufteintrittskasten gemäß Anspruch 1, **dadurch gekennzeichnet, dass** die Ableitelemente Rippungen (32, 32a-32c) sind, die auf der Lufteintrittsklappe (16) angeordnet sind, welche in dem Durchgang des Stroms hervorstehen, wenn die Lufteingangsklappe fast geschlossen ist.

3. Lufteintrittskasten gemäß Anspruch 1 oder 2, **dadurch gekennzeichnet, dass** die Ableitelemente unregelmäßige Längen transversal zur Richtung des Stroms aufweisen.

4. Lufteintrittskasten gemäß Anspruch 1 bis 3, **dadurch gekennzeichnet, dass** Rippungen (34, 34a-34d) auf dem Verteilergehäuse dem Eindringungsschlitz gemäß der Richtung des Stroms in einer Fünferanordnung im Verhältnis zu den Rippungen (32, 32a-32c) auf der Lufteintrittsklappe nachgeschaltet sind, die dem Eindringungsschlitz vorgeschaltet sind.

5. Lufteintrittsgehäuse gemäß Anspruch 4, **dadurch gekennzeichnet, dass** die Rippungen (32, 32a-32c) der Lufteintrittsklappe sich teilweise mit den Rippungen (34, 34a-34d) des Verteilergehäuses an ihren lateralen Rändern überlappen.

6. Lufteintrittsklappe gemäß Anspruch 1 bis 5, **dadurch gekennzeichnet, dass** die Rippungen (34, 34a-34d) des Verteilergehäuses ein Wellenprofil auf einer freien Längskante umfassen.

7. Lufteintrittskasten gemäß Anspruch 6, **dadurch gekennzeichnet, dass** das Wellenprofil durch Ausnehmungen geformt ist, die einer halbkreisförmigen Form benachbart sind.

8. Lufteintrittskasten gemäß Anspruch 7, **dadurch gekennzeichnet, dass** die halbkreisförmigen Ausnehmungen unterschiedliche Radien aufweisen.

9. Lufteintrittskasten gemäß Anspruch 3 bis 8, **dadurch gekennzeichnet, dass** die Rippungen der Lufteintrittsklappe in einer Richtung und transversal zur Richtung des Stroms konstant abnehmende Längen aufweisen.

10. Lufteintrittskasten gemäß Anspruch 1 bis 9, **dadurch gekennzeichnet, dass** die Lufteintrittsklappe einen Korpus aus steifem Plastik (16a) und eine Dichtlippe (16b) aus elastischem Material umfasst, die auf seinen mit der Abdichtfläche zusammenwirkenden Rand angewendet wird, und dass die Rippungen (32, 32a-32c) auf dem Korpus aus Plastik an der Grenze der Nahtstelle mit der Abdichtlippe gebildet sind.

11. Lufteintrittsklappe gemäß Anspruch 1 bis 10, **dadurch gekennzeichnet, dass** der Außenlufteintritt durch einen transversalen Stift (22) in zwei parallelen Stromdurchgänge unterteilt ist, die jeder mit einer Eindringungsöffnung versehen sind, die durch eine jeweilige Lufteintrittsklappe geschlossen sein kann.

## Claims

1. Air intake housing for a heating and/or air-conditioning apparatus in vehicles, including a distribution housing (10) in which an outer air intake (12) is made, at least one air intake valve (16) arranged such as to pivot on an axis of the distribution housing and arranged in the outer air intake transversely to the air flow direction, said valve (16) in closed position resting with the outer edge thereof on a sealing surface of the distribution housing, which surrounds the outer air intake (12), diverting elements being arranged such as to cause a variation in the speed of the flow transversely to the general flow direction, said diverting elements being arranged spaced apart from an entry slot (SA, SB1, SB2) formed in almost closed position between the outer edge and the sealing surface, **characterised in that** the diverting elements (22a, 32, 32a,-32c, 34, 34a-34d) are distributed at irregular intervals transversely to the flow direction.

2. Air intake housing according to claim 1, **characterised in that** the diverting elements are ribs (32, 32a-32c) arranged on the air intake valve (16), which project into the flow passage when the air intake valve is almost closed.

3. Air intake housing according to claims 1 or 2, **characterised in that** the diverting elements have irregular lengths transversely to the flow direction.

4. Air intake housing according to any claim 1 to 3, **characterised in that** ribs (34, 34a-34d) on the distribution housing are arranged downstream from the entry slot in the flow direction, staggered relative to the ribs (32, 32a-32c) on the air intake valve, located upstream from the entry slot.

5. Air intake housing according to claim 4, **characterised in that** the ribs (32, 32a-32c) of the air intake valve partially overlap with the ribs (34, 34a-34d) of the distribution housing at the side edges thereof.

6. Air intake housing according to any claim 1 to 5, **characterised in that** the ribs (34, 34a-34d) of the distribution housing comprise a corrugated profile on a free longitudinal edge.

7. Air intake housing according to claim 6, **characterised in that** the corrugated profile is made up of adjacent recesses with a substantially semi-circular shape.

8. Air intake housing according to claim 7, **characterised in that** the semi-circular recesses have different radii.

9. Air intake housing according to any claim 3 to 8, **characterised in that** the ribs of the air intake valve have, in one direction and transversely to the flow direction, constantly decreasing lengths.

10. Air intake housing according to any claim 1 to 9, **characterised in that** the air intake valve comprises a rigid plastic body (16a) and a sealing lip (16b) made of resilient material applied to the edge thereof engaging with the sealing surface, and **in that** the ribs (32, 32a-32c) on the plastic body are formed at the boundary of the junction with the sealing lip.

11. Air intake housing according to any claim 1 to 10, **characterised in that** the outer air intake is divided by a transverse rod (22) into two parallel flow passages, each provided with an entry opening that can be closed by a respective air intake valve.
